# EUROPEAN PATENT SPECIFICATION

(11) **EP 0 724 525 B1**
(45) Date of publication and mention of the grant of the patent: **10.06.1998**
(21) Application number: 94931261.5
(22) Date of filing: 25.10.1994
(51) Int. Cl.: B62D 33/037

(54) **A LATCH MECHANISM FOR SIDE PANELS AT CARGO PLATFORM STANCHIONS**
VERRIEGELUNG VON BORDWÄNDEN AN RUNGEN VON LADEPLATTFORMEN
MECANISME DE VERROUILLAGE POUR PANNEAUX LATERAUX SITUES AU NIVEAU D'ETAN ONS DE PLATE-FORME DE CARGAISON

(30) Priority: 26.10.1993 SE 9303513
(43) Date of publication of application: 07.08.1996
(73) Proprietor: ROSEN, Göran, 531 16 Lidköping (SE)
(72) Inventor: ROSEN, Göran, 531 16 Lidköping (SE)
(74) Representative: Roth, Ernst Adolf Michael
(86) International application number: SE9401001
(87) International publication number: WO9511827

(56) References cited:
- SE-B- 468 759
- SE-C- 218 048

## Description

### TECHNICAL FIELD

The present invention refers to a latch mechanism for holding pivotally mounted panels at stanchions on a vehicle cargo platform, wherein each stanchion is equipped with at least one latch device, comprising a lever for actuation of at least one longitudinally along the stanchion displaceable latch bolt which is arranged for cooperation with a tubular securing means on the panel.

### BACKGROUND OF THE INVENTION

Stanchions with latch mechanisms for panels according to above are for example described in SE 218 048 and SE 468 759. It is a known phenomenon that the cargo on the vehicle cargo platform can be shifted towards one or several of the panels. This can cause problems, when the panels of the platform shall be dropped down for unloading the cargo. For example, a loaded panel may swing down suddenly and forcefully, so that the operator of the latch device can be hurt. Besides, it is known that the lever at certain latch mechanisms may swing out with unexpected force when operating it by opening, if the panel is influenced by shifted cargo.

### THE PURPOSE OF THE INVENTION

The purpose of the present invention is to provide a latch mechanism, by which the operator obtains distinct indications, if the panel is loaded by shifted cargo, so that necessary precautions may be taken before the latch mechanism is opened.

### THE SOLUTION

For this purpose, the invention is characterized in that the latch bolt is provided with friction means on the side facing the platform, that the securing means is provided with friction means on that side, which when the latch bolt is in engagement with the securing means is directed towards the friction means on the latch bolt, that the latch bolt is actuated by spring means in the direction away from the friction means of the securing means, and that a clearance between the latch bolt and the insides of the securing means makes it possible to move the latch bolt in and out of engagement with the securing means.

### DESCRIPTION OF THE DRAWINGS

The invention will in the following be described with reference to embodiments which are shown on the enclosed drawings, in which
- Fig. 1: shows a stanchion with a latch device according to the invention in a front view and partly sectioned,
- Fig. 2: shows on an enlarged scale the latch mechanism latch bolt in view from the side, and
- Fig. 3: shows in even larger scale the cooperation of the latch bolt and the securing means of the panel.

### DESCRIPTION OF EMBODIMENTS

The latch device according to the invention is mounted within a stanchion which in its entirety is designated with 10 and consists of a pole housing 11. This is preferably constituted by a hollow profile which is rectangular in transection, and which is provided with to both sides projecting flanges 12, forming support surfaces for panels 13 in upright position. These panels 13 are pivotally journalled at the edge of a vehicle cargo platform 14, in such a manner that they can be dropped down from a locked upright position at the stanchions, to a dropped down passive position.

The latch device can be manipulated by means of a lever 15. This is with one of its ends via a pivot shaft 16 pivotally connected to a connection rod 17, which in its turn is connected to at least one lock wedge 18, which cooperates with a holder 19 arranged at the vehicle cargo platform 14 with guide-rails adapted to the lock wedge.

An additional bearing pivot 20 is arranged at the lever 15, some distance away from the pivot shaft 16, which is a common bearing for both a link rod 21 and a pressure spring 22 that is guided at both ends by a respective guide bolt. The opposite end of the link arm 21 is via a pivot bolt 23 pivotally connected to a latch bolt 24 which is axially displaceable in the pole housing 11, which latch bolt cooperates with a securing means 25 arranged at one side edge of the cargo panel 13. The securing means 25 is insertable in a recess 26 in the pole housing 11. The axial displacement of the latch bolt 24 in the pole housing 11 is limited in its lower end by means of a stop means 27. The extension 28 of the latch bolt 24 shown in the drawing, can be coupled with another latch apparatus (not shown) for a hood support.

The operating lever 15, which has a U-formed section, is so designed, that there is room for both the link arm 21 as well as the compression spring 23 between the U-shanks.

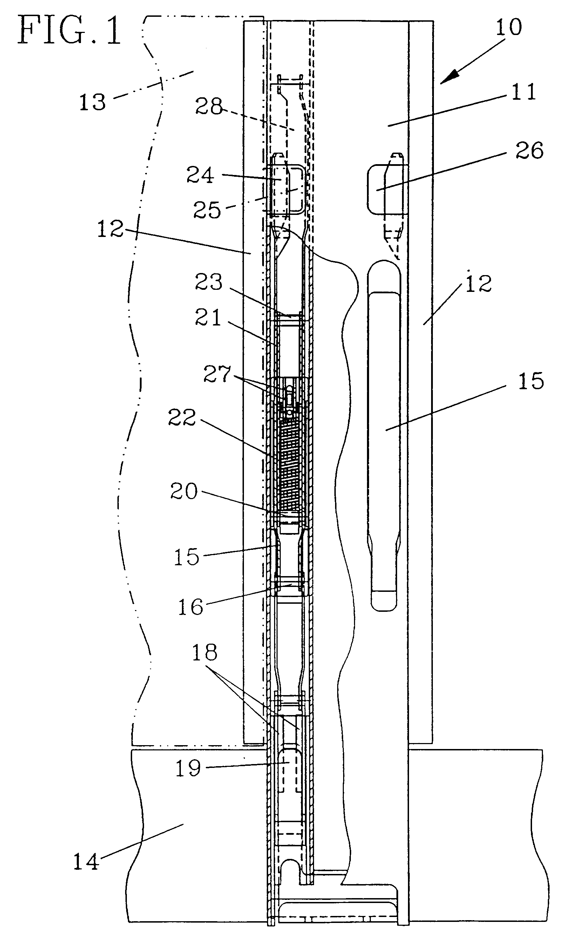

In the folded up position of the lever 15, according to Fig. 1, the panel latch mechanism is locked, which means that the stanchion is locked to the platform and that the cargo panel 13 is locked to the stanchion 10. If the cargo panel shall be released from the stanchion, the operating lever 15 is swung down to an intermediate position, in which the latch bolt 24 has been displaced downwards, so that the securing means 25 of the cargo panel can leave the stanchion.

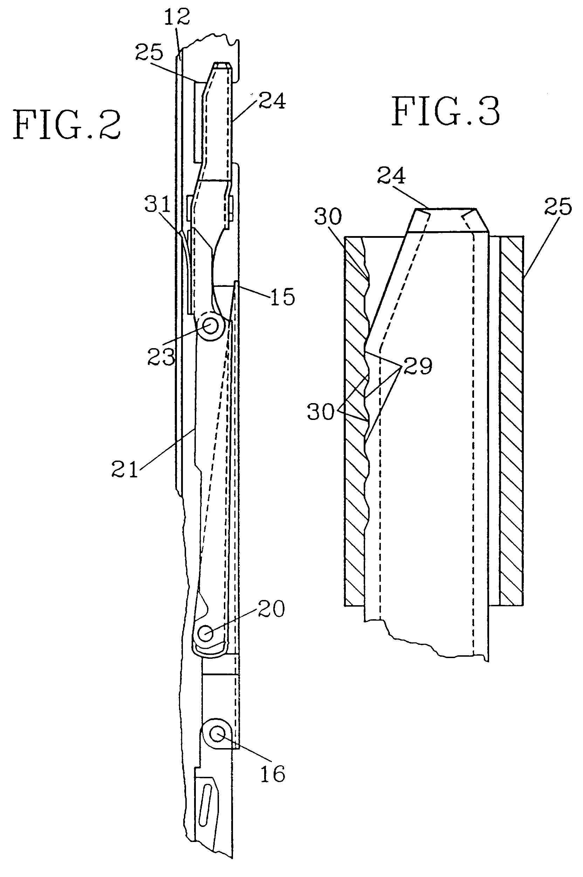

Fig. 3 discloses the tip end of the latch bolt 24 seen from the side, and in cooperation with the securing means 25 of the panel. The side of the latch bolt which is turned towards the edge of the cargo platform is provided with a series of protrusions 29 extending across the longitudinal axis of the latch bolt. The adjacent inside of the securing means 25 is equipped with corresponding protrusions 30, as shown in Fig. 3, which can be brought to grip in between the protrusions 29 on the latch bolt. This locks the latch bolt in the securing means so that it consequently can not be displaced from its locking position by means of the operating lever 15.

Normally however, the latch bolt 24 is pressed towards the other side of the securing mean, by the action of a leaf spring 31 shown in Fig. 2. This spring 31 is located on the side of the latch bolt 24 and acts between this and the panel 13, so that both surfaces with protrusions are kept at distance from each other. This is possible since there is a clearance between the latch bolt and the insides of the securing means which play is bigger than the height of the protrusions 29, 30. Thus, the force of the spring 31 is sufficient to normally hold the protrusions apart, so that the latch bolt 24 can be operated in a normal way.

If the panel 13 is influenced by an outwards directed side force, which is caused by shifting of the cargo on a platform, the protrusions 29, 30 will comes to engage each other. This implies that an operator of the operating lever will get a clear indication that the cargo on the platform should be removed from the panel before it is opened.

The invention is not limited to the above described embodiment, but more variants are conceivable within the scoop of the following claims. For example, the spring means 31 can be designed and located differently than shown.

## Claims

1. Latch mechanism for holding pivotally mounted panels (13) at stanchions (10) on a vehicle cargo platform (14), wherein each stanchion (10) is equipped with at least one latch device, comprising a lever (15) for actuation of at least one longitudinally along the stanchion displaceable latch bolt (24) which is arranged for cooperation with a tubular securing means (25) on the panel (13),
**characterized** in that the latch bolt (24) is provided with friction means (29) on the side facing the platform (14), that the securing means (25) is provided with friction means (30) on that side, which when the latch bolt is in engagement with the securing means is directed towards the friction means on the latch bolt, that the latch bolt (24) is actuated by spring means (31) in the direction away from the friction means (30) of the securing means (25), and that a clearance between the latch bolt and the insides of the securing means makes it possible to move the latch bolt in and out of engagement with the securing means.

2. Latch mechanism according to claim 1,
**characterized** in that the friction means consist of a series of protrusions (29, 30) arranged in parallel and across the longitudinal direction of the stanchion (10).

3. Latch mechanism according to claim 2,
**characterized** in that the protrusions (29, 30) are arranged with an equal spacing primarily corresponding to their width.

4. Latch device according to any one of claims 1 to 3,
**characterized** in that the clearance between the latch bolt (24) and the inside of the securing means (25) is larger than the height of the protrusions (29, 30).

## Patentansprüche

1. Verriegelungsvorrichtung zum Halten verschwenkbar befestigter Seitenwände (13) an Rungen (10) auf einer Ladeplattform (14) eines Fahrzeuges, wobei jede Runge (10) mit mindestens einer Verriegelungseinrichtung ausgerüstet ist, die einen Hebel (15) zur Betätigung von mindestens einem längs entlang der Runge verschiebbaren Verriegelungsbolzen (24) aufweist, der mit einer rohrförmigen Sicherungseinrichtung (25) auf der Seitenwand (13) zusammenwirkt,
**dadurch gekennzeichnet**,
daß der Verriegelungsbolzen (24) mit einer Reibungseinrichtung (29) auf der der Plattform (14) zugewandten Seite versehen ist, daß die Sicherungseinrichtung (25) mit einer Reibungseinrichtung (30) auf der der Reibungseinrichtung des Verriegelungsbolzen zugewandten Seite versehen ist, wenn die Verriegelungseinrichtung in Eingriff mit der Sicherungseinrichtung ist, daß der Verriegelungsbolzen (24) von einer Federeinrichtung (31) weg von der Reibungseinrichtung (30) der Sicherungseinrichtung (25) beaufschlagt ist und daß ein Freiraum zwischen dem Verriegelungsbolzen und den Innenseiten der Sicherungseinrichtung er möglich macht, den Verriegelungsbolzen in und außer Eingriff mit der Sicherungseinrichtung zu bringen.

2. Verriegelungsvorrichtung nach Anspruch 1,
**dadurch gekennzeichnet**,
daß die Reibungseinrichtung eine Reihe von Vorsprüngen (29, 30) umfaßt, die parallel zueinander und quer zur Längsrichtung der Runge (10) angeordnet sind.

3. Verriegelungsvorrichtung nach Anspruch 2,
**dadurch gekennzeichnet**,
daß die Vorsprünge (29, 30) gleichmäßig voneinander beabstandet sind, in erster Linie entsprechend ihrer Weite.

4. Verriegelungsvorrichtung nach einem der Ansprüche 1 bis 3,
**dadurch gekennzeichnet**,
daß der Freiraum zwischen dem Verriegelungsbolzen (24) und der Innenseite der Sicherungseinrichtung (25) größer ist als die Höhe der Vorsprünge (29, 30).

## Revendications

1. Mécanisme de verrouillage destiné à maintenir des panneaux (13) montés pivotants au niveau d'étançons (10) de plate-forme de cargaison (14) d'un véhicule, dans lequel chaque étançon (10) est équipé d'au moins un dispositif de verrouillage comprenant un levier (15) d'actionnement d'au moins un pêne (24) susceptible d'être déplacé longitudinalement le long de l'étançon et agencé de façon à coopérer avec un moyen de fixation tubulaire (25) situé sur le panneau (13),
caractérisé en ce que le pêne (24) présente des moyens de friction (29) sur sa face en regard de la plate-forme (14), en ce que le moyen de fixation (25) présente des moyens de friction (30) sur sa face qui, quand le pêne (24) est mise en prise avec le moyen de fixation, est orientée vers les moyens de friction (29) du pêne, en ce que le pêne (24) est soumis à l'action de moyens élastiques (31) qui tendent à l'écarter des moyens de friction (30) du moyen de fixation (25) et en ce qu'un jeu entre le pêne et les faces internes du moyen de fixation autorise le déplacement du pêne en vue de son engagement dans le moyen de fixation ou de son dégagement de ce dernier.

2. Mécanisme de verrouillage selon la revendication 1, caractérisé en ce que les moyens de friction consistent en des séries de saillies (29, 30) agencées parallèlement entre elles et dans la direction longitudinale de l'étançon (10).

3. Mécanisme de verrouillage selon la revendication 2, caractérisé en ce que les saillies (29, 30) sont agencées à des intervalles réguliers équivalant sensiblement à leur largeur.

4. Dispositif de verrouillage selon l'une quelconque des revendications 1 à 3, caractérisé en ce que le jeu entre le pêne (24) et la face interne du moyen de fixation (25) est supérieur à la hauteur des saillies (29, 30).
